# EUROPÄISCHE PATENTSCHRIFT

(11) **EP 1 180 819 B1**
(45) Veröffentlichungstag und Bekanntmachung des Hinweises auf die Patenterteilung: **06.10.2004**
(21) Anmeldenummer: 01117633.6
(22) Anmeldetag: 24.07.2001
(51) Int. Cl.: H01R 11/28

(54) **Batterieklemme**
Battery terminal
Borne de batterie

(30) Priorität: 08.08.2000 DE 10038650
(43) Veröffentlichungstag der Anmeldung: 20.02.2002
(73) Patentinhaber: Harting Automotive GmbH & Co. KG, 32339 Espelkamp (DE)
(72) Erfinder: Krause, Jens, Dr.-Ing., 32369 Rahden (DE); Konersmann, Roland, Dipl.-Ing., 49124 Georgsmarienhütte (DE); Leve, Ludger, 32369 Rahden (DE)
(74) Vertreter: Sties, Jochen, Dipl.-Ing.

(56) Entgegenhaltungen:
- EP-A- 0 466 528
- EP-A- 0 606 068
- US-A- 3 116 100
- US-A- 3 538 490
- US-A- 3 568 139
- US-A- 5 584 730

## Beschreibung

Die Erfindung betrifft eine Batterieklemme, mit einer Anschlußlasche, einem Kontaktring, der mit einem Schlitz versehen ist, so daß zwei einander gegenüberliegende Klemmenden gebildet sind, einer Feder, die an den Klemmenden des Kontaktringes angreift, und einem Sperrkeil, der verstellbar ist zwischen einer Kontaktstellung, in der er die Klemmenden freigibt, so daß die Feder die Klemmenden zusammenziehen kann, einer Montagestellung, in der er die Klemmenden des Kontaktringes gespreizt hält, so daß die Batterieklemme auf einen Batteriepol aufgesetzt werden kann, und einer Abzugsstellung, in der er die Klemmenden des Kontaktringes weiter spreizt als in der Montagestellung, so daß die Batterieklemme von einem Batteriepol abgezogen werden kann.

Mit einer solchen Batterieklemme kann ein üblicherweise konischer, aus Blei bestehender Batteriepol kontaktiert werden. Das Problem beim Kontaktieren eines solchen Batteriepols besteht darin, daß zur zuverlässigen Kontaktierung eine bestimmte Kontaktkraft möglichst präzise eingehalten werden muß. Bei zu geringen Kontaktkräften ergibt sich nur ein unzureichender metallischer Kontakt zwischen dem Batteriepol und der Batterieklemme. Werden dagegen zu hohe Kontaktkräfte aufgebracht, führt dies zu einer Verformung und einem Fließen des Materials des Batteriepols.

Die gebräuchlichste Batterieklemme besteht aus einer Kontaktschelle, die auf den Batteriepol aufgesetzt und dann mittels einer Schraube zusammengezogen wird. Nachteilig an dieser Art von Batterieklemme ist, daß die tatsächlich aufgebrachte Kontaktkraft nur unzureichend überwacht werden kann. Zum einen besteht die Gefahr, daß durch das Anziehen der Schraube mit einem Schraubenschlüssel ein sehr viel höheres Anzugsdrehmoment und somit eine sehr viel höhere Kontaktkraft aufgebracht wird, als dies eigentlich erforderlich ist. Zum anderen besteht die Gefahr, daß dann, wenn die Batterieklemme bei einem bereits verformten Batteriepol verwendet wird, die Kontaktschelle von der Schraube auf Block gezogen wird, so daß ein hohes Anzugsdrehmoment für die Schraube erhalten wird, das jedoch nicht mit der tatsächlich erzielten, niedrigeren Kontaktkraft übereinstimmt.

Aus dem Stand der Technik sind ferner verschiedene Batterieklemmen bekannt, die Federelemente verwenden, welche eine konstante Kontaktkraft gewährleisten sollen. Diese Batterieklemmen sind jedoch vergleichsweise kompliziert aufgebaut.

Ein Beispiel einer Batterieklemme der eingangs genannten Art findet sich in der US-A-3,116,100, die den nächstkommenden Stand der Technik darstellt.

Die Aufgabe der Erfindung besteht darin, eine Batterieklemme zu schaffen, die einfach und kostengünstig herstellbar ist und gleichzeitig prozeßsicher ist, also mit hoher Sicherheit sowohl manuell als auch automatisiert montiert werden kann, ohne daß es zu Fehlmontagen kommen kann, und die mit geringem Aufwand wieder demontiert werden kann.

Diese Aufgabe wird erfindungsgemäß gelöst durch eine Batterieklemme, die dadurch gekennzeichnet ist, daß jedes Klemmende mit einer abgebogenen Lasche versehen ist, die jeweils eine erste Schräge aufweist, und daß der Sperrkeil zwischen den Laschen der Klemmenden angeordnet ist, daß jede Lasche mit einer Arretierkante versehen ist und daß jede Lasche zusätzlich mit einer zweiten Schräge versehen ist, die von der ersten Schräge aus betrachtet hinter der Arretierkante liegt, wobei der minimale Abstand zwischen den beiden einander gegenüberliegenden zweiten Schrägen kleiner ist als der Abstand zwischen den beiden einander gegenüberliegenden Arretierkanten. Bei der erfindungsgemäßen Batterieklemme sind drei definierte Zustände der Batterieklemme möglich. In der Montagestellung kann die Batterieklemme frei auf den konischen Batteriepol aufgeschoben werden, bis der Kontaktring flächig an dem Batteriepol anliegt. In der Kontaktstellung wird der Kontaktring elastisch um den Batteriepol zusammengezogen. Die dabei aufgebrachte Kontaktkraft wird von der Auslegung der Feder bestimmt und bleibt dabei aufgrund der von der Feder aufgebrachten elastischen Vorspannung selbst über einen längeren Zeitraum konstant. In der Abzugsstellung wird der Kontaktring weiter gespreizt, als dies bei der Montage der Fall ist. Dies gewährleistet, daß trotz eventueller Setzungserscheinungen im montierten Zustand und trotz einer eventuellen Vorspannung, die bei der Montage auf den Kontaktring aufgebracht wird, ein einfaches Abziehen der Batterieklemme möglich ist. Erfindungsgemäß genügt eine einfach aufzubringende translatorische Bewegung des Sperrkeils, um den Kontaktring aus der Kontaktstellung in die Montagestellung zu spreizen. An dieser Arretierkante kann sich der Sperrkeil abstützen, wenn er sich in der Montagestellung befindet, in der die Klemmenden des Kontaktringes gespreizt gehalten werden. Auf diese Weise ist eine vergleichsweise hohe Betätigungskraft erforderlich, um den Sperrkeil über die Arretierkante hinweg zu bewegen und in die Klemmstellung zu gelangen; dies gewährleistet, daß ein unbeabsichtigtes Überführen der Batterieklemme aus der Montagestellung in die Kontaktstellung verhindert ist. Die aufzubringende hohe Betätigungskraft führt auch zu einer vorteilhaften Art der Montage der Batterieklemme. Wenn die Arretierkante scharfkantig ausgeführt wird, wie dies bevorzugt wird, kann der Sperrkeil durch eine bloße Druckkraft nicht über die Arretierkante hinweggeschoben werden. Dies ist erst möglich, wenn zuvor die Klemmenden geringfügig gespreizt wurden. Dies kann erzielt werden durch Aufdrücken der sich in der Montagestellung befindenden Batterieklemme auf den konischen Batteriepol. Erst wenn die Batterieklemme mit einer bestimmten Kraft auf den Batteriepol gedrückt wird, so daß sich eine Flächenberührung ergibt, wird der Kontaktring geringfügig von dem konischen Batteriepol gespreizt. Nunmehr kann der Spreizkeil über die Arretierkante rutschen und die Klemmenden des Kontaktringes freigeben, so daß die Feder die Klemmenden zusammenziehen kann. Die endgültige Kontaktkraft wird somit ausschließlich von der Auslegung der Feder bestimmt, wobei aber das vorherige Aufdrücken der Batterieklemme auf den Batteriepol gewährleistet, das eine Flächenberührung zwischen dem Batteriepol und dem Kontaktring ausgebildet ist. Hieraus ergibt sich eine hohe Montagesicherheit, da das Überführen des Sperrkeils aus der Montagestellung in die Kontaktstellung erst dann möglich ist, wenn durch die entsprechende Spreizung des Kontaktringes signalisiert wird, daß eine bestimmte Vor-Kontaktkraft zwischen dem Kontaktring und dem Batteriepol aufgebaut wurde. Diese Vor-Kontaktkraft sorgt für einen zuverlässigen Sitz der Batterieklemme, da bereits während des Aufdrückens der Batterieklemme die Bereiche einer Punktberührung des Batteriepols durch Fließen des Materials beseitigt werden. Weiterhin kann die Abzugsstellung in einfacher Weise dadurch herbeigeführt werden, daß der Sperrkeil aus der Kontaktstellung über die Arretierkante hinaus in den Bereich der zweiten Schräge gezogen wird. Da die beiden zweiten Schrägen näher aneinander liegen als die beiden Arretierkanten, ist gewährleistet, daß der Kontaktring in der Abzugsstellung weiter gespreizt wird als während der Montage; während der Montage wird der Kontaktring gerade so weit gespreizt, daß der Sperrkeil zwischen den beiden Arretierkanten hindurchrutschen kann.

Gemäß der bevorzugten Ausführungsform der Erfindung ist vorgesehen, daß der Sperrkeil mit einer verstellbar angebrachten Abdeckkappe verbunden ist. Die Abdeckkappe dient sowohl als Schutz für die Batterieklemme als auch als Montagehilfe. Die Abdeckkappe bietet nämlich eine geeignete Druckfläche, um von Hand die erforderliche Aufsetzkraft aufbringen zu können. Die auf die Abdeckkappe ausgeübte Druckkraft dient gleichzeitig dazu, den Sperrkeil aus der Montagestellung in die Kontaktstellung zu überführen. Da das Aufsetzen der Batterieklemme und das anschließende Verriegeln durch Überführen des Sperrkeiles aus der Montagestellung in die Kontaktstellung in einer einzigen Richtung erfolgt, kann die Montage leicht automatisiert werden. Auch eine manuelle Montage bereitet keinerlei Probleme, da sie lediglich aus dem Aufdrücken der Batterieklemme auf den Batteriepol besteht. In beiden Fällen stellt das ruckartige Überwinden der Arretierkante durch den Sperrkeil einen sowohl bei einer automatisierten Montage als auch bei einer manuellen Montage gut spürbaren Indikator dafür dar, daß die Montage erfolgreich abgeschlossen ist.

Gemäß der bevorzugten Ausführungsform ist der Kontaktring mit mindestens einer Aussparung versehen, und an der Abdeckkappe ist eine Tastlasche angebracht, der sich an einem Rand der Aussparung abstützen kann und ein Verstellen des Sperrkeils in die Kontaktstellung verhindert, wenn im Inneren des Kontaktringes kein Batteriepol angeordnet ist. Auf diese Weise ist gewährleistet, daß der Sperrkeil nicht unbeabsichtigt, beispielsweise während des Transports, in die Kontaktstellung gelangen kann, so daß die nachfolgende Montage der Batterieklemme nicht möglich wäre.

Vorzugsweise erstreckt sich die Tastlasche entlang der Verstellrichtung des Sperrkeils, und sie ist mit zwei Schrägflächen versehen, die mit einer Schräge am Rand der Aussparung zusammenwirken. Diese Ausrichtung der Tastlasche führt zu einer hohen Belastbarkeit, wenn auf die Abdeckkappe ein Druck ausgeübt wird, und die Schrägflächen sind so angeordnet, daß sich bei einem solchen Druck die Haltekraft der Tastlasche in der Aussparung erhöht.

Gemäß einer alternativen Ausführungsform können die Tastlaschen auch senkrecht zur Verstellrichtung des Sperrkeils angeordnet sein, also waagrecht an der Abdeckkappe angeordnet sein. Dies bietet Vorteile hinsichtlich der Elastizität und des erforderlichen und zulässigen Federweges.

Vorzugsweise ist an der Abdeckkappe ein Hebel gelagert, der sich an dem Kontaktring abstützt und mittels dem der Sperrkeil aus der Kontaktstellung über die Montagestellung in die Abzugsstellung gebracht werden kann. Der Hebel muß dazu bei geeigneter Lagerung lediglich nach oben von dem Batteriepol weg angehoben werden, wodurch sowohl das Überführen des Kontaktringes aus der Kontaktstellung in die Abzugsstellung als auch das Abheben der Batterieklemme vom Batteriepol mittels einer Bewegung in einer einzigen Richtung erhalten wird. Als Alternative zum Hebel kann auch ein Exzenter verwendet werden, der die Laschen des Kontaktringes durch eine Drehbewegung spreizen und wieder freigeben kann.

Der Hebel ist vorzugsweise mit einer ersten und einer zweiten Abstützfläche versehen, die sich auf dem Kontaktring abstützen können, wobei die zweite Abstützfläche, von der Drehachse des Hebels aus betrachtet, außerhalb der ersten Abstützfläche liegt und wobei zwischen der ersten und der zweiten Abstützfläche eine Anlagefläche gebildet ist. Die Anlagefläche kann an einer geeigneten Anlagekante am Kontaktring in Anlage gelangen und verhindert zuverlässig, daß der Hebel "überstreckt "wird, also unzulässig weit verschwenkt wird.

Vorzugsweise ist die Feder mit einer Haltelasche versehen, und der Sperrkeil ist mit einer Haltenase versehen, die an der Haltelasche in Anlage gelangen kann und den Verstellweg des Sperrkeils begrenzt. Die Haltenase ist dabei vorzugsweise so gestaltet, daß sie bei der Anbringung der Abdeckkappe an dem Kontaktring hinter die Haltelasche schnappt, indem diese elastisch nach außen gebogen wird.

Gemäß einer bevorzugten Ausführungsform der Erfindung ist der Kontaktring auf seiner Innenseite mit einer Rändelung versehen. Dies sorgt für einen zuverlässigen Sitz des Kontaktringes auf dem konischen Batteriepol, so daß der Kontaktring nicht nach oben "wegschwimmen" kann. Alternativ können auch Rillen vorgesehen sein, die entlang der Längsrichtung des Batteriepols verlaufen und für eine ausreichende mechanische Reibung zwischen dem Batteriepol und dem Kontaktring sorgen.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 in einer perspektivischen Ansicht eine Batterieklemme gemäß einer bevorzugten Ausführungsform;

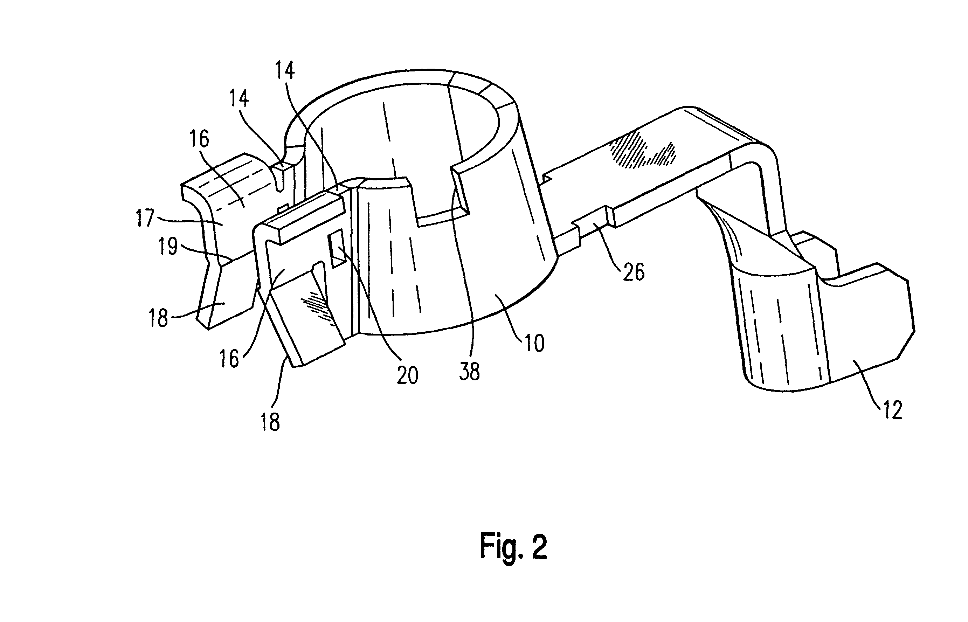

- Figur 2 in einer perspektivischen, schematischen Ansicht den Kontaktring mit Anschlußlasche, der bei der Batterieklemme von Figur 1 verwendet wird;
- Figur 3 den Kontaktring mit Anschlußlasche von Figur 2, wobei eine Feder aufgesetzt ist;
- Figur 4 in einer perspektivischen, schematischen Ansicht ein Detail der Batterieklemme von Figur 1;
- Figur 5 in einer perspektivischen, schematischen und teilgeschnittenen Ansicht ein weiteres Detail der Batterieklemme von Figur 1;
- Figur 6 in einer Vorderansicht den Kontaktring der Batterieklemme von Figur 1;
- Figur 7 in einer vergrößerten Ansicht das Detail VII von Figur 6;
- Figur 8 in einer perspektivischen Ansicht eine Variante eines Hebels für die Batterieklemme;
- Figur 9 in einer teilgeschnittenen Ansicht den Hebel von Figur 8;
- Figur 10 in einer abgebrochenen, vergrößerten Ansicht den vorderen Abschnitt des Hebels von Figur 8 im Zusammenwirken mit dem Kontaktring der Batterieklemme;
- Figur 11 in einer geschnittenen, vergrößerten Ansicht eine Tastlasche, die bei der Batterieklemme von Figur 1 verwendet wird.

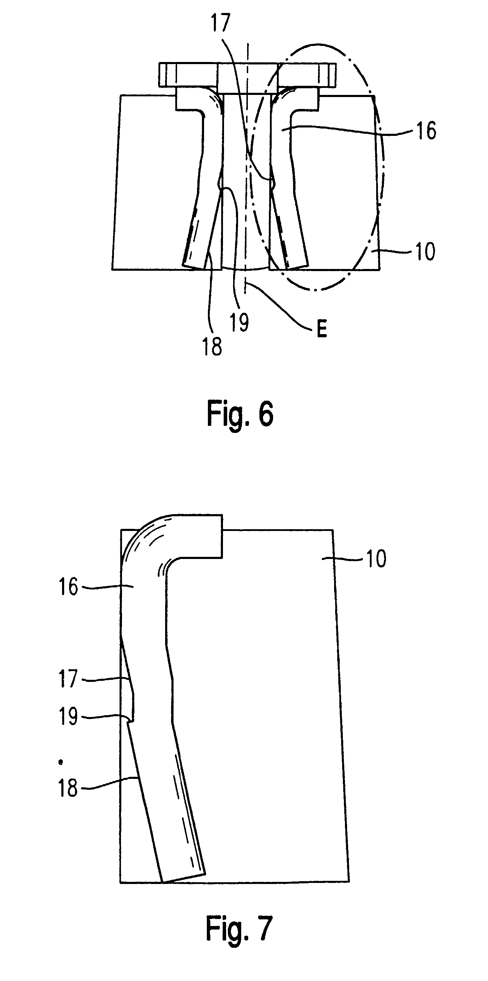

Die Batterieklemme weist als zentrales Bestandteil einen Kontaktring 10 auf, der mit einer Anschlußlasche 12 versehen ist. Die Anschlußlasche dient zur Kontaktierung eines beliebigen Leiters, der an einen Batteriepol angeschlossen werden soll. Der Kontaktring 10 ist mit einem Schlitz ausgeführt, so daß zwei einander gegenüberliegende Klemmenden 14 gebildet sind, die jeweils mit einer Lasche 16 versehen sind. Jede Lasche 16 ist mit einer ersten Schräge 18, einer Arretierkante 19 sowie einer zweiten Schräge 17 versehen (siehe im Detail die Figuren 6 und 7). Die Arretierkante ist zwischen der ersten und der zweiten Schräge angeordnet und steht um etwa 0,3 bis 0,5 mm gegenüber dem Auslaufbereich der zweiten Schräge 17 hervor. Die zweite Schräge ist so ausgebildet, daß sie von einer Mittelebene E des Kontaktringes (siehe Figur 6) einen minimalen Abstand hat, nämlich am bezüglich der Figuren oberen Ende, der kleiner ist als der Abstand der Arretierkante von dieser Ebene. Die Funktion dieser Ausgestaltung wird später erläutert.

Das Bauteil bestehend aus dem Kontaktring 10 mit den Laschen 16 sowie der Anschlußlasche 12 ist ein einstückiges Blechbiegeteil mit einer Wandstärke von etwa 1,5 bis 1,8 mm. Der Kontaktring 10 wird dabei so gebogen, daß er an die konische Form des anzuschließenden Batteriepols angepaßt ist.

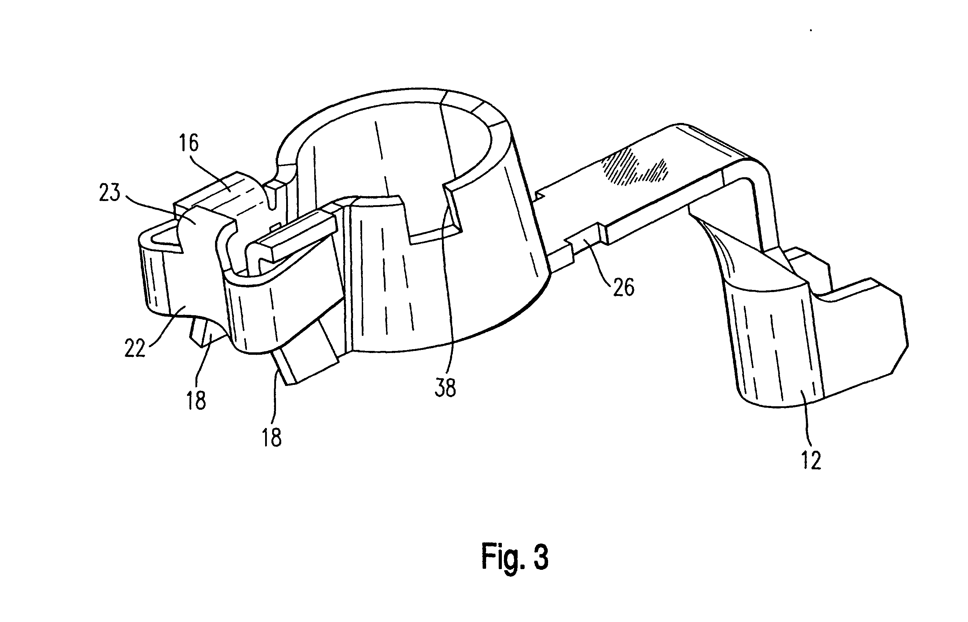

An den Laschen 16 des Kontaktringes 10 greift eine Feder 22 (siehe Figur 3) an, welche die Laschen 16 zusammenzudrücken sucht. Um ein Abrutschen der Feder 22 zu verhindern, ist diese mit zwei Nasen versehen, welche in Aussparungen 20 eingreifen, die an den Laschen 16 ausgebildet sind. Die Feder ist ferner mit einer Haltelasche 23 versehen, deren Funktion später erläutert wird.

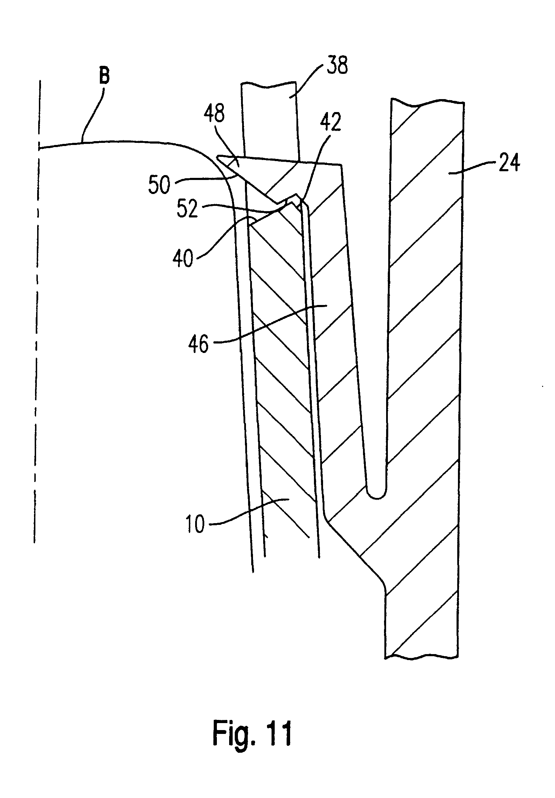

Der Kontaktring 10 ist mit zwei einander gegenüberliegenden Aussparungen 38 versehen, von denen in den Figuren der besseren Übersichtlichkeit halber nur jeweils eine gezeigt ist. Die Aussparungen erstrecken sich ausgehend von dem bezüglich der Figuren oberen Rand des Kontaktringes nach unten, also ausgehend von der Seite, auf der später die Oberseite des anzuschließenden Batteriepols liegt. Der untere Rand der Aussparungen ist mit einer Innenschräge 40 und einer Außenschräge 42 versehen (siehe Figur 11).

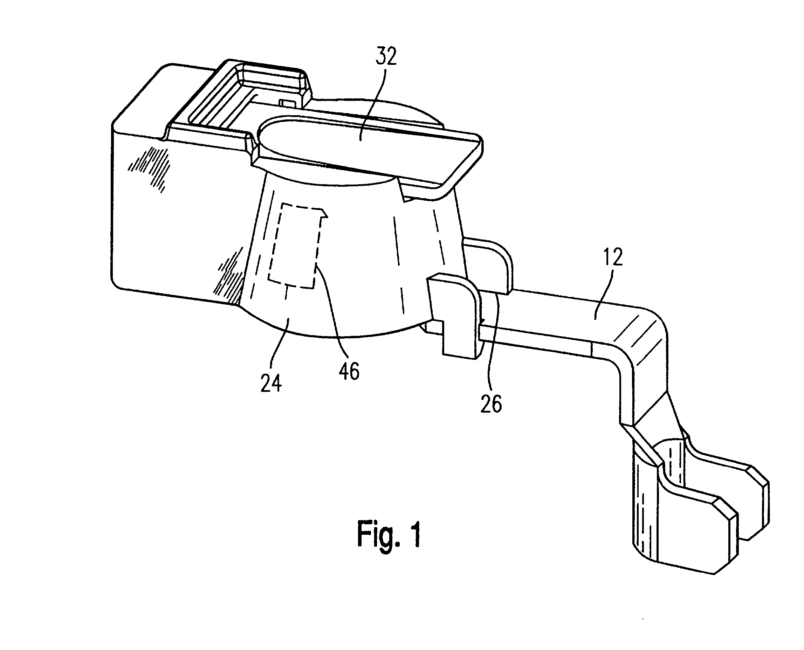

Die Batterieklemme ist mit einer Abdeckkappe 24 (siehe insbesondere Figur 1) versehen, welche den Kontaktring 10 überdeckt und schwenkbar an Einkerbungen 26 der Anschlußlasche 12 gelagert ist. Die Abdeckkappe 24 ist mit einem Sperrkeil 28 versehen, der durch einen Materialsteg 30 einstückig an die Abdeckkappe 24 angeformt und zwischen den beiden Laschen 16 des Kontaktringes 10 angeordnet ist. Am Materialsteg 30 ist eine Haltenase 44 angebracht, die mit der Haltelasche 23 an der Feder 22 zusammenwirken kann.

An der Abdeckkappe 24 sind federnd zwei Tastlaschen 46 angebracht, die sich von einem unteren Rand der Abdeckkappe (siehe Figur 11) ausgehend nach oben zum Deckel der Abdeckkappe erstrecken und deren freie Enden jeweils mit einem Tastvorsprung 48 versehen sind, der durch die Aussparung 38 in das Innere des Kontaktringes hineinragt. Der Tastvorsprung 48 weist auf seiner der Innenschräge 40 und der Außenschräge 42 zugewandten Seite eine erste Schrägfläche 50 bzw. eine zweite Schrägfläche 52 auf.

An der Abdeckkappe 24 ist ein zweiarmiger Hebel 32 mittels Lagerzapfen 34 gelagert. Der eine Arm bildet einen Griffabschnitt 54, der über dem Kontaktring liegt, und der andere Arm weist eine Abstützfläche 56 auf, die auf zwei Widerlagerflächen 36 aufliegt, die an den Laschen 16 ausgebildet sind. Der Hebel 32 ist in diesem Bereich gegabelt ausgeführt, so daß der Materialsteg 30 sich zwischen den beiden Enden erstrecken kann, die auf den Widerlagerflächen 36 aufliegen.

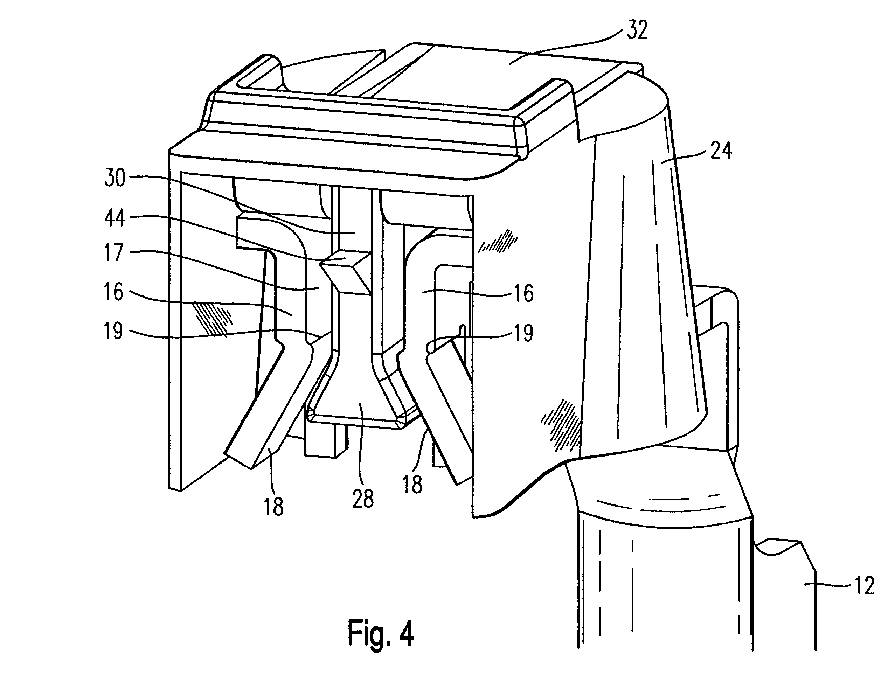

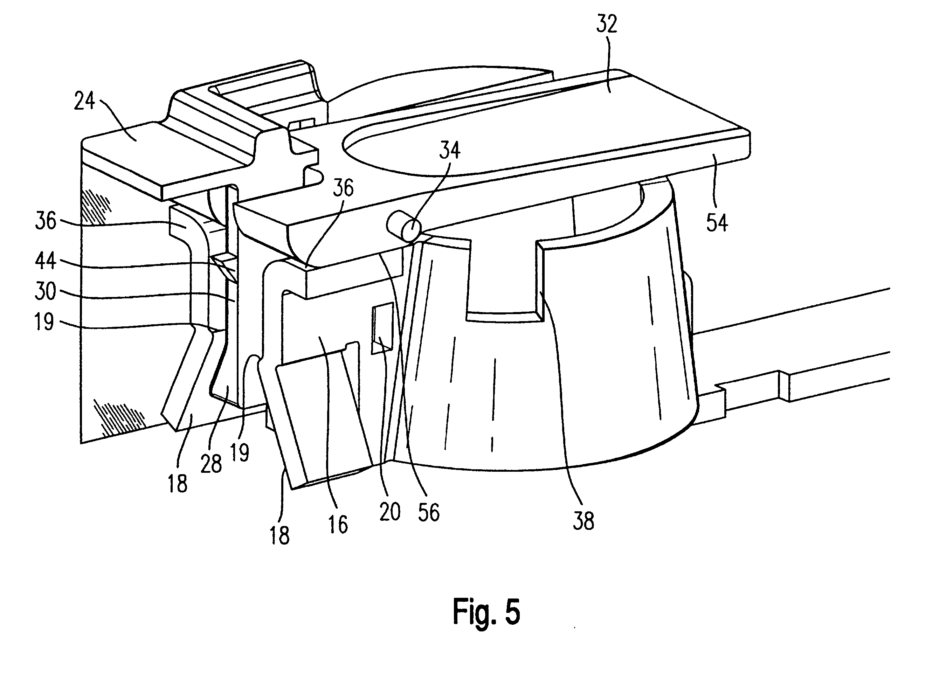

Der Sperrkeil 28 kann zusammen mit der Abdeckkappe 24 zwischen einer Kontaktstellung, die in den Figuren 1, 4 und 5 gezeigt ist, sowie einer Montagestellung und einer Abzugsstellung verstellt werden, die beide in den Figuren nicht gezeigt sind. In der Kontaktstellung befindet sich der Sperrkeil in einem Bereich zwischen den beiden Schrägen 18, in welchem er diese nicht berührt. Somit können die beiden Laschen 16 von der Feder 22 zusammengezogen werden. In der Montagestellung befindet sich der Sperrkeil 28 zwischen den beiden Laschen 16 oberhalb der beiden Schrägen 18, wobei er an der Arretierkante 19 anliegt, die verhindert, daß er unbeabsichtigt in die Kontaktstellung gelangt. In der Abzugsstellung befindet sich der Sperrkeil zwischen den beiden zweiten Schrägen 17, so daß die beiden Laschen weiter gespreizt werden als in der Montagestellung.

Das Aufsetzen der erfindungsgemäßen Batterieklemme auf einen Batteriepol erfolgt in der folgenden Weise: Im Anlieferungszustand befindet sich die Batterieklemme in der Montagestellung, in der der Sperrkeil 28 die beiden Laschen 16 auseinanderspreizt, wodurch auch der Kontaktring 10 gespreizt ist. In diesem Zustand verhindern die Tastlaschen, daß der Sperrkeil in die Kontaktstellung überführt werden kann, wenn die Batterieklemme nicht auf einen Batteriepol aufgesetzt ist. Zum Überführen des Sperrkeils in die Kontaktstellung müßte die Abdeckkappe, an der der Sperrkeil befestigt ist, relativ zum Kontaktring verschoben werden, und zwar bezüglich der Figuren nach unten. Dies ist, solange sich die Tastlaschen in der in Figur 11 gezeigten Stellung befinden, nicht möglich, da sich die Tastlaschen jeweils mit der zweiten Schrägfläche 52 auf der Innenschräge 40 des Randes der Aussparung 38 abstützen. Wenn in dieser Stellung ein Druck auf die Abdeckkappe ausgeübt wird, erhöht sich aufgrund der Ausrichtung der Innenschräge 40 und der zweiten Schrägfläche 52 die Kraft, mit der die Tastlasche zum Inneren des Kontaktringes gezogen wird; es entsteht also eine Selbsthemmung.

Erst wenn die Batterieklemme so weit auf einen in Figur 11 angedeuteten Batteriepol B aufgeschoben ist, daß das obere Ende des Batteriepols an dem Tastvorsprung 48 anliegt und diesen nach außen drückt, der Batteriepol also geringfügig weiter in den Kontaktring eingeschoben ist als in Figur 11 gezeigt, wird die Tastlasche nach außen gedrückt, wobei die zweite Schrägfläche 52 über die Kante zwischen der Innenschräge 40 und der Außenschräge 42 rutscht. Wenn dieser Totpunkt überwunden ist, führt die Ausrichtung der ersten Schrägfläche 50 und der Außenschräge 42 dazu, daß der Tastvorsprung 48 nach außen beaufschlagt wird, also ein Verschieben der Abdeckkappe relativ zum Kontaktring nicht mehr verhindert wird. Da die Aussparung 38, in der Aufsteckrichtung der Batterieklemme gesehen, sehr weit hinten liegt, ist die Abdeckkappe erst freigegeben, wenn der Kontaktring fast vollständig auf den Batteriepol aufgeschoben ist.

Wenn dies der Fall ist, kann durch eine auf die Abdeckkappe aufgebrachte Druckkraft eine Verschiebung der Abdeckkappe relativ zum Kontaktring hervorgerufen werden. Die auf die Abdeckkappe 24 ausgeübte Kraft wird dabei zum einen über die Einkerbungen 26 und zum anderen über den Materialsteg 30 und den an den Arretierkanten 19 anliegenden Sperrkeil 28 auf den Kontaktring 10 übertragen. Aufgrund der konischen Ausgestaltung des Batteriepols und des an diesem anliegenden Kontaktringes wird die ausgeübte Druckkraft in eine auf den Kontaktring 10 einwirkende Spreizkraft umgesetzt, wenn der Kontaktring entsprechend weit auf den Batteriepol aufgeschoben ist. Diese Spreizkraft weitet den Kontaktring geringfügig und ermöglicht, daß der Sperrkeil 28 beim Auseinanderbewegen der Laschen 16 unter der Wirkung der weiterhin ausgeübten Druckkraft über die Arretierkante 19 rutscht. Die Abdeckkappe 24 wird dann weiter auf den Kontaktring 10 aufgeschoben, wobei der Sperrkeil 28 in seine Kontaktstellung überführt wird, in der er nicht mehr an den Laschen 16 und den Schrägen 18 angreift. Nunmehr werden die Laschen 16 von der Feder 22 zusammengedrückt, so daß der Kontaktring zusammengezogen wird und sich eine gleichmäßige Kontaktkraft ergibt.

Die Abdeckkappe wird gelöst, indem der Hebel 32 an seinem Griffabschnitt 54 angehoben wird. Dies bewirkt, daß die Abdeckkappe über die Lagerstifte 34 vom Kontaktring 10 abgehoben wird, wodurch der Sperrkeil 28 zwischen den beiden Schrägen 18 hindurch bis über die Arretierkante 19 gezogen wird. Durch weiteres Anheben des Hebels 32 gelangt der Sperrkeil in den Bereich zwischen den beiden zweiten Schrägen 17, so daß der Kontaktring 10 weiter gespreizt wird als im Montagezustand. In dieser Abzugsstellung kann die Batterieklemme ohne große Kraftanstrengung durch Ziehen am Hebel 32 vom Batteriepol abgenommen werden. Die zweiten Schrägen 17 sind vorzugsweise so ausgestaltet, daß die Abzugsstellung nicht stabil ist und der Sperrkeil in die Montagestellung zurückrutscht, so daß die Batterieklemme zur erneuten Anbringung auf einem Batteriepol bereit ist.

Die Haltenase 44 ist am Mittelsteg der Abdeckkappe so angeordnet, daß sie in der Abzugsstellung des Sperrkeils mit der Haltelasche 23 an der Feder derart zusammenwirkt, daß die Abdeckkappe nicht übermäßig weit über die Abzugsstellung hinaus vom Kontaktring abgedrückt werden kann.

Ein besonderer Vorteil der erfindungsgemäßen Batterieklemme besteht darin, daß die Montage und die Demontage in nur einer einzigen Bewegungsrichtung erfolgen. Zur Montage ist lediglich eine Druckkraft auf die Abdeckkappe 24 der Batterieklemme auszuüben. Diese Druckkraft sorgt zunächst dafür, daß der Kontaktring fest auf den anzuschließenden Batteriepol aufgepreßt wird. Dabei ergibt sich bereits eine Flächenberührung zwischen dem Batteriepol und dem Kontaktring. Erst wenn die dabei erzielte Kontaktkraft einen bestimmten Wert überschreitet, der durch die Höhe der Arretierkanten 19 eingestellt werden kann, ist ein Überführen der Batterieklemme aus der Montagestellung in die Kontaktstellung möglich. Dies geschieht nach Freigeben des Sperrkeils 28 durch dieselbe Druckkraft, die nun den Sperrkeil in einen Bereich verschiebt, in welchem er nicht mehr an den Laschen und den Schrägen angreift. Bei diesem Montageverfahren ergibt sich außerdem eine hohe Prozeßsicherheit. Das Hinübergleiten des Sperrkeils 28 über die Arretierkanten 19 ist sowohl bei einer manuellen Montage als auch bei einer automatisierten Montage zuverlässig detektierbar und liefert eine Anzeige dafür, daß die Batterieklemme sicher auf dem Batteriepol eingerastet ist.

Auch die Demontage der Batterieklemme erfolgt entlang einer einzigen Betätigungsrichtung. Es muß lediglich eine Zugkraft auf den Hebel 32 in einer Richtung von dem Batteriepol weg ausgeübt werden. Diese Zugkraft überführt zunächst die Batterieklemme aus der Kontaktstellung über die Montagestellung in die Abzugsstellung und zieht dann die Batterieklemme vom Batteriepol ab.

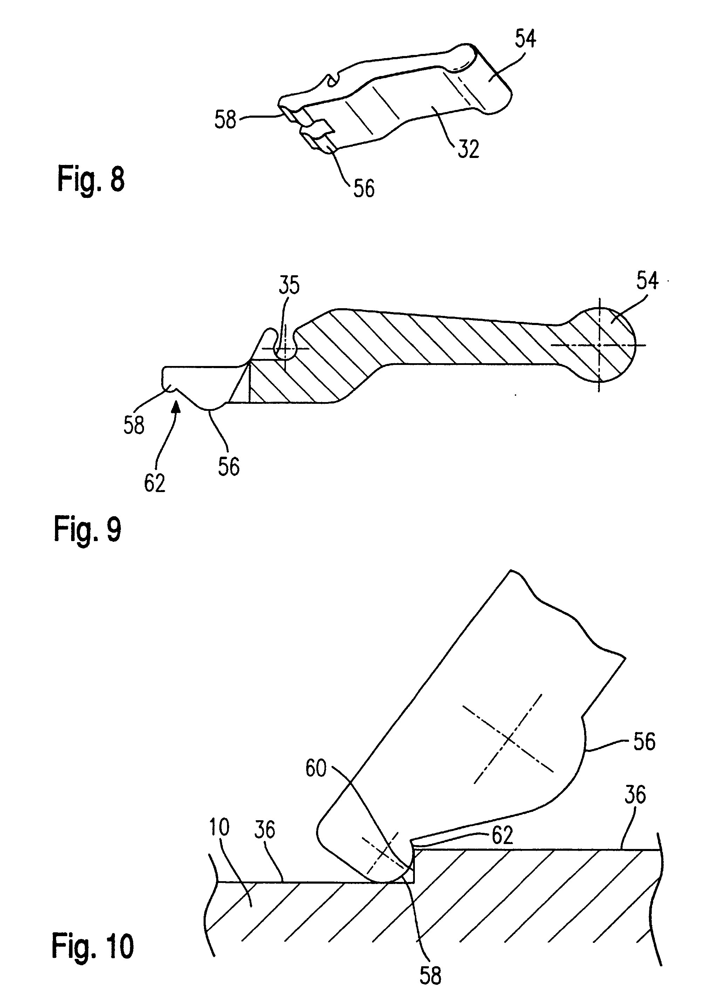

In den Figuren 8 bis 10 ist eine Variante des Hebels 32 gezeigt, mit dem die Abdeckkappe 24 vom Kontaktring abgedrückt werden kann, um den Sperrkeil aus der Kontaktstellung in die Abzugsstellung zu bringen. Anstelle der Lagerzapfen 34 weist der Hebel eine Lagernut 35 auf, mit der der Hebel in eine zugehörige Lagerkante an der Abdeckkappe einschnappt und sich an dieser abstützt.

An seinem vorderen, vom Griffabschnitt 54 entgegengesetzten Ende ist der Hebel 32 mit einer ersten Abstützfläche 56 und einer zweiten Abstützfläche 58 versehen, die beide dafür vorgesehen sind, sich auf dem Kontaktring 10 abzustützen. Beide Abstützflächen sind mit einer gekrümmten Kontur versehen, so daß sie sich beim Anheben des Hebels auf der Widerlagerfläche 36 des Kontaktrings abwälzen. Bezüglich einer Ebene, die durch die Mitte des Griffabschnittes 54 und der Lagernut 35 verläuft, ist die zweite Abstützfläche 58 gegenüber der ersten Abstützfläche 56 zurückgesetzt. Anders ausgedrückt: wenn der Hebel ausgehend von seiner waagerechten Position angehoben wird, liegt an der Widerlagerfläche 36 des Kontaktrings 10 zunächst die erste Abstützfläche auf, so daß die Abdeckkappe vom Kontaktring abgedrückt wird. Ab einen bestimmten Schwenkwinkel des Hebels erfolgt der Übergang von der ersten zur zweiten Abstützfläche; die erste Abstützfläche wird vom Kontaktring abgehoben. Dies ermöglicht, daß die erste Abstützfläche frei über eine Anlagekante 60 hinwegbewegt wird, die an der Widerlagerfläche 36 des Kontaktrings 10 gebildet ist (siehe Figur 10). An dieser Anlagekante gelangt eine Anlagefläche 62 zur Anlage, die zwischen der ersten und der zweiten Abstützfläche 56, 58 gebildet ist. Durch Anlage der Anlagefläche 62 an der Anlagekante 60 ist zuverlässig verhindert, daß der Hebel 32 über eine Stellung überstreckt wird, die der Abzugsstellung des Sperrkeils entspricht.

## Patentansprüche

1. Batterieklemme mit einer Anschlußlasche (12), einem Kontaktring (10), der mit einem Schlitz versehen ist, so daß zwei einander gegenüberliegende Klemmenden (14) gebildet sind, einer Feder (22), die an den Klemmenden des Kontaktringes angreift, und einem Sperrkeil (28), der verstellbar ist zwischen einer Kontaktstellung, in der er die Klemmenden freigibt, so daß die Feder die Klemmenden zusammenziehen kann, einer Montagestellung, in der er die Klemmenden des Kontaktringes gespreizt hält, so daß die Batterieklemme auf einen Batteriepol aufgesetzt werden kann, und einer Abzugsstellung, in der er die Klemmenden des Kontaktringes weiter spreizt als in der Montagestellung, so daß die Batterieklemme von einem Batteriepol abgezogen werden kann, **dadurch gekennzeichnet, daß** jedes Klemmende mit einer abgebogenen Lasche (16) versehen ist, die jeweils eine erste Schräge (18) aufweist, daß der Sperrkeil (28) zwischen den Laschen der Klemmenden angeordnet ist, daß jede Lasche (16) mit einer Arretierkante (19) versehen ist und daß jede Lasche (16) zusätzlich mit einer zweiten Schräge (17) versehen ist, die von der ersten Schräge (18) aus betrachtet hinter der Arretierkante liegt, wobei der minimale Abstand zwischen den beiden einander gegenüberliegenden zweiten Schrägen (21) kleiner ist als der Abstand zwischen den beiden einander gegenüberliegenden Arretierkanten (19).

2. Batterieklemme nach Anspruch 1, **dadurch gekennzeichnet, daß** der Sperrkeil (28) mit einer verstellbar angebrachten Abdeckkappe (24) verbunden ist.

3. Batterieklemme nach Anspruch 2, **dadurch gekennzeichnet, daß** an der Abdeckkappe (24) ein Hebel (32) gelagert ist, der sich an dem Kontaktring abstützt und mittels dem der Sperrkeil aus der Kontaktstellung über die Montagestellung in die Abzugsstellung gebracht werden kann.

4. Batterieklemme nach Anspruch 3, **dadurch gekennzeichnet, daß** der Hebel mit einer ersten Abstützfläche (56) versehen ist, die sich auf dem Kontaktring (10) abstützen kann, und mit einer zweiten Abstützfläche (58), die von der Drehachse des Hebels aus betrachtet außerhalb der ersten Abstützfläche liegt, wobei zwischen der ersten und der zweiten Abstützfläche eine Anlagefläche (62) gebildet ist.

5. Batterieklemme nach einem der Ansprüche 2 bis 4, **dadurch gekennzeichnet, daß** der Kontaktring mit mindestens einer Aussparung (38) versehen ist und daß an der Abdeckkappe eine Tastlasche (46) angebracht ist, die sich an einem Rand der Aussparung abstützen kann und ein Verstellen des Sperrkeils (28) in die Kontaktstellung verhindert, wenn im Inneren des Kontaktringes kein Batteriepol angeordnet ist.

6. Batterieklemme nach Anspruch 5, **dadurch gekennzeichnet, daß** die Tastlasche sich entlang der Verstellrichtung des Sperrkeils erstreckt und mit zwei Schrägflächen (50, 52) versehen ist, die mit einer Schräge am Rand der Aussparung zusammenwirken.

7. Batterieklemme nach einem der vorhergehenden Ansprüche, **dadurch gekennzeichnet, daß** die Feder (22) mit einer Haltelasche (23) versehen ist und daß der Sperrkeil (28) mit einer Haltenase (44) versehen ist, die an der Haltelasche (23) in Anlage gelangen kann und den Verstellweg des Sperrkeils begrenzt.

8. Batterieklemme nach einem der vorhergehenden Ansprüche, **dadurch gekennzeichnet, daß** der Kontaktring (10) auf seiner Innenseite mit einer Rändelung versehen ist.

9. Batterieklemme nach einem der Ansprüche 1 bis 7, **dadurch gekennzeichnet, daß** der Kontaktring (10) auf seiner Innenseite mit Rillen versehen ist, die entlang der Längsrichtung eines Batteriepols verlaufen, auf den die Batterieklemme aufgesetzt werden kann.

## Claims

1. A battery terminal with a terminal lug (12), a contact ring (10) that is provided with a slot such that two oppositely arranged clamping ends (14) are formed, a spring (22) that engages on the clamping ends of the contact ring, and a locking wedge (28) that can be displaced between a contact position, in which it releases the clamping ends such that the spring is able to pull the clamping ends together, an installation position, in which it spreads apart the clamping ends of the contact ring such that the battery terminal can be attached to a pole of the battery, and a removal position, in which it spreads apart the clamping ends of the contact ring farther than in the installation position such that the battery terminal can be removed from the battery pole, **characterized in that** each clamping end is provided with a bent lug (16) that respectively contains a first bevel (18), **in that** the locking wedge (28) is arranged between the lugs of the clamping ends, **in that** each lug (16) is provided with a locking edge (19), and **in that** each lug (16) is also provided with a second bevel (17) that, viewed from the first bevel (18), lies behind the locking edge, wherein the minimum spacing between the two oppositely arranged second bevels (21) is smaller than the spacing between the two oppositely arranged locking edges (19).

2. The battery terminal according to Claim 1, **characterized in that** the locking wedge (28) is connected to an adjustable cap (24).

3. The battery terminal according to Claim 2, **characterized in that** a lever (32) is arranged on the cap (24), wherein said lever is supported on the contact ring and serves for displacing the locking wedge from the contact position into the removal position via the installation position.

4. The battery terminal according to Claim 3, **characterized in that** the lever is provided with a first support surface (56) that can be supported on the contact ring (10) and a second support surface (58) that, viewed from the axis of rotation of the lever, lies outside the first support surface, wherein a contact surface (62) is formed between the first and the second support surface.

5. The battery terminal according to one of Claims 2-4, **characterized in that** the contact ring is provided with at least one recess (38), and **in that** a sensing lug (46) is arranged on the cap, wherein the sensing lug can be supported on one edge of the recess and prevents the locking wedge (28) from being displaced into the contact position when no battery pole is situated in the interior of the contact ring.

6. The battery terminal according to Claim 5, **characterized in that** the sensing lug extends along the direction of displacement of the locking wedge and is provided with two beveled surfaces (50, 52) that cooperate with a bevel on the edge of the recess.

7. The battery terminal according to one of the preceding claims, **characterized in that** the spring (22) is provided with a holding lug (23), and **in that** the locking wedge (28) is provided with a holding tab (44) that can come in contact the holding lug (23) and limits the displacement of the locking wedge.

8. The battery terminal according to one of the preceding claims, **characterized in that** the inner side of the contact ring (10) is provided with a knurl.

9. The battery terminal according to one of Claims 1-7, **characterized in that** the inner side of the contact ring (10) is provided with grooves that extend along the longitudinal direction of a battery pole, to which the battery terminal can be attached.

## Revendications

1. Borne de batterie, avec une languette de raccordement (12), une bague de contact (10) munie d'une fente, de façon à former deux extrémités de serrage (14) réciproquement opposées, un ressort (22) qui s'accroche dans les extrémités de serrage de la bague de contact et une clavette de blocage (28) laquelle est réglable entre une position de contact, dans laquelle elle libère les extrémités de serrage, permettant au ressort de rapprocher les extrémités de serrage, une position de montage, dans laquelle elle maintient les extrémités de serrage de la bague de contact écartées, permettant de poser la borne de batterie sur un pôle de batterie et une position de retrait dans laquelle elle écarte les extrémités de serrage plus loin qu'en position de montage, ce qui permet de retirer la borne de batterie d'un pôle de batterie, **caractérisée en ce que** chaque extrémité de serrage est munie d'une languette courbe (16), qui présente respectivement une première oblique (18), **en ce que** la clavette de blocage (28) est disposée entre les languettes des extrémités de serrage, **en ce que** chaque languette (16) est munie d'un bord d'arrêt (19) et **en ce que** chaque languette (16) est munie en supplément d'une seconde oblique (17), qui vue à partir de la première oblique (18), se situe derrière le bord d'arrêt, la distance minimale entre les deux secondes obliques (21) qui sont réciproquement opposées étant inférieure à la distance entre les deux bordures d'arrêt (19) qui sont réciproquement opposées.

2. Borne de batterie selon la revendication 1, **caractérisée en ce que** la clavette de blocage (28) est reliée avec un capuchon (24) monté de façon réglable.

3. Borne de batterie selon la revendication 2, **caractérisée en ce qu'**un levier (32) qui s'appuie sur la bague de contact et à l'aide duquel la clavette de blocage est amenée de la position de contact à la position de retrait, par l'intermédiaire de la position de montage est logé sur le capuchon (24).

4. Borne de batterie selon la revendication 3, **caractérisée en ce que** le levier est muni d'une première surface d'appui (56), pouvant s'appuyer sur la bague de contact (10) et d'une seconde surface d'appui (58) qui vue à partir de l'axe de rotation du levier est située à l'extérieur de la première surface d'appui, une surface d'application (62) étant formée entre la première et la seconde surface d'appui.

5. Borne de batterie selon l'une quelconque des revendications 2 à 4, **caractérisée en ce que** la bague de contact est munie d'au moins un creux (38) et **en ce qu'**une languette de manipulation (46) qui peut s'appuyer sur un bord du creux et qui empêche un déréglage de la clavette de blocage (26) en position de contact lorsque aucun pôle de batterie ne se trouve à l'intérieur de la bague de contact est montée sur le capuchon.

6. Borne de batterie selon la revendication 5, **caractérisée en ce que** la languette de manipulation s'étend le long d'un sens de déplacement de la clavette de blocage et **en ce qu'**elle est munie de deux surfaces obliques (50, 52) qui coopèrent avec une oblique sur le bord du creux.

7. Borne de batterie selon l'une quelconque des revendications précédentes, **caractérisée en ce que** le ressort (22) est muni d'une languette de maintien (23) et **en ce que** la clavette de blocage (28) est munie d'un ergot de maintien (44) qui peut venir s'appliquer sur la languette de maintien (23) et qui limite la course de déplacement de la clavette de blocage.

8. Borne de batterie selon l'une quelconque des revendications précédentes, **caractérisée en ce que** la bague de contact (10) est munie d'un moletage sur sa face interne.

9. Borne de batterie selon l'une quelconque des revendications 1 à 7, **caractérisée en ce que** sur sa face interne, la bague de contact est munie de rainures qui s'étendent le long de la direction longitudinale d'un pôle de batterie, sur lequel on peut poser la borne de batterie.
